# EUROPÄISCHE PATENTSCHRIFT

(11) **EP 3 766 333 B1**
(45) Veröffentlichungstag und Bekanntmachung des Hinweises auf die Patenterteilung: **11.05.2022**
(21) Anmeldenummer: 20162271.9
(22) Anmeldetag: 11.03.2020
(51) Int. Cl.: A01F 15/07

(54) **WICKELEINRICHTUNG, LANDWIRTSCHAFTLICHE RUNDBALLENPRESSE SOWIE VERFAHREN ZUM BETRIEB DER WICKELEINRICHTUNG**
WRAPPING DEVICE, AGRICULTURAL BALING PRESS AND METHOD FOR OPERATING THE WRAPPING DEVICE
DISPOSITIF D'ENROULEMENT, PRESSE À BALLES RONDES AGRICOLES ET PROCÉDÉ DE FONCTIONNEMENT DU DISPOSITIF D'ENROULEMENT

(30) Priorität: 16.07.2019 DE 102019119280
(43) Veröffentlichungstag der Anmeldung: 20.01.2021
(73) Patentinhaber: Usines CLAAS France S.A.S, 57140 St. Rémy / Woippy (FR)
(72) Erfinder: Rongvaux, Laurent, 54800 Tronville (FR)
(74) Vertreter: CLAAS Gruppe

(56) Entgegenhaltungen:
- EP-A1- 3 164 000
- DE-A1-102015 112 218
- US-A1- 2017 049 058

## Beschreibung

Die vorliegende Anmeldung betrifft eine Wickeleinrichtung gemäß dem Oberbegriff von Anspruch 1. Ferner betrifft die vorliegende Anmeldung eine Rundballenpresse gemäß Anspruch 8 sowie ein Verfahren zum Betrieb einer Rundballenpresse gemäß dem Oberbegriff von Anspruch 9.

Eine typische landwirtschaftliche Rundballenpresse umfasst eine Aufnahmeeinrichtung, mittels der Erntegut von einem Untergrund aufgenommen werden kann. Eine solche Aufnahmeeinrichtung kann insbesondere eine Häckseleinrichtung umfassen, mittels der aufgenommenes Erntegut häckselbar ist. Das aufgenommene Erntegut ist mittelbar oder unmittelbar einer Presskammer der Rundballenpresse zuleitbar, mittels der das Erntegut zu dem Rundballen pressbar ist. Hierbei ist es grundsätzlich denkbar, dass die Presskammer als feste Presskammer oder als variable Presskammer ausgebildet ist. In der Praxis ist es üblich, fertiggestellte Rundballen mit einem Hüllmaterial einzuwickeln, um den Rundballen dauerhaft zu konservieren. Insbesondere soll ein Eintreten von Wasser sowie ein Luftaustausch zwischen einem Inneren der Einwicklung und der Umgebung vermieden werden. Zu diesem Zweck sind Wickeleinrichtungen bekannt, mittels derer fertiggestellte Rundballen automatisch einwickelbar sind.

Eine solche Wickeleinrichtung ist demzufolge in jedem Fall der Rundballenpresse nachgeschaltet, wobei typischerweise der gepresste Rundballen aus der Presskammer entlassen und der Wickeleinrichtung zugeführt wird. Dabei ist es grundsätzlich denkbar, eine Wickeleinrichtung und eine Rundballenpresse gemeinsam als eine landwirtschaftliche Maschine auszubilden, wobei die Maschine ein einziges Gehäuse aufweist und die Wickeleinrichtung unmittelbar an einem rückwärtigen Ende der Rundballenpresse ausgebildet ist. Die Wickeleinrichtung umfasst eine Ballenaufnahme, mittels der ein gepresster Rundballen aufnehmbar ist. Nach seiner Aufnahme befindet sich der Rundballen in einer Wickelposition, in der er mit dem Hüllmaterial einwickelbar ist. Die Ballenaufnahme kann vorzugsweise mit einer Bewegungseinrichtung ausgestattet sein, mittels der der in seiner Wickelposition vorliegende Rundballen rotierbar ist, insbesondere um seine Mittelachse. Hierzu kann die Bewegungseinrichtung beispielsweise eine Mehrzahl von Rollen aufweisen, die parallel zueinander sowie parallel zu der Mittelachse des Rundballens ausgerichtet sind. Mittels aktiven Antriebs mindestens einer der Rollen kann der Rundballen in eine Rotation versetzt werden. Ferner umfasst die Wickeleinrichtung mindestens einen Wickelarm, an dem ein mindestens ein Materialspeicher mit dem darauf vorgehaltenen Hüllmaterial angeordnet ist. Der gepresste Rundballen ist sodann mittels der Wickeleinrichtung einwickelbar, wobei der Wickelarm und der Rundballen mittels eines elektrischen Antriebs der Wickeleinrichtung relativ zueinander bewegbar sind. Insbesondere ist es denkbar, dass mindestens ein Wickelarm, vorzugsweise zwei Wickelarme, der Wickeleinrichtung um eine insbesondere vertikale Rotationsachse rotierbar ausgebildet sind und auf diese Weise um den Rundballen "herumlaufen" können. Hierbei kann das Hüllmaterial, das typischerweise von einer Folie gebildet ist, sukzessive um den Rundballen gewickelt werden.

Wickeleinrichtungen der vorstehend beschriebenen Art sind im Stand der Technik bereits bekannt. Hierzu wird beispielhaft auf die europäische Patentanmeldung EP 2 033 894 A1 hingewiesen. Diese beschreibt eine Wickeleinrichtung, die für eine Rundballenpresse vorgesehen ist. Die Wickeleinrichtung umfasst zwei einander gegenüberliegend angeordnete Wickelarme, die um eine vertikale Rotationsachse rotierbar ausgebildet sind und jeweils einen Materialspeicher tragen. Ferner umfasst die Wickeleinrichtung eine Bewegungseinheit, mittels der der Rundballen um seine Mittelachse rotierbar ist. Mittels simultanen Betriebs der Wickelarme sowie der Bewegungseinheit wird der gepresste Rundballen sukzessive mit dem Hüllmaterial eingewickelt, wobei das Hüllmaterial typischerweise in mehreren Lagen auf den Rundballen aufgetragen wird. Weiterer Stand der Technik ist das Dokument DE 10 2015 112218 A1, welches eine Wickeleinrichtung gemäß dem Oberbegriff des Anspruchs 1 offenbart. Z

Es hat sich als problematisch herausgestellt, bekannte Wickeleinrichtungen dauerhaft zuverlässig zu betreiben. Dies liegt darin begründet, dass Positionen der einzelnen Bauteile der Wickeleinrichtung sowie sonstige Betriebszustände der Wickeleinrichtung dauerhaft mittels einer Mehrzahl von Sensoreinrichtungen überwacht werden müssen, um die Wickeleinrichtung insgesamt steuern zu können. Die Vielzahl von Sensoreinrichtungen hat den Nachteil, dass eine Ausfallwahrscheinlichkeit für mindestens einen Sensor über eine Betriebsdauer der jeweiligen Wickeleinrichtung hinweg vergleichsweise hoch ist. Somit kommt es im Stand der Technik regelmäßig dazu, dass mindestens eine Sensoreinrichtung keine oder fehlerhafte Daten liefert, die sodann unweigerlich zu einer fehlerhaften Steuerung der einzelnen Bauteile der Wickeleinrichtung führen. Sobald dies auftritt, ist typischerweise eine Arbeitsunterbrechung erforderlich, die eine Diagnose und gegebenenfalls eine Reparatur einer jeweiligen Sensoreinrichtung erfordert sowie eine Wiederherstellung eines Maschinenzustands notwendig macht, von dem ausgehend der Betrieb der Wickeleinrichtung fortgeführt werden kann.

Der vorliegenden Anmeldung liegt mithin die Aufgabe zugrunde, eine Wickeleinrichtung bereitzustellen, deren Betrieb im Vergleich zum Stand der Technik zuverlässiger möglich ist.

Die zugrunde liegende Aufgabe wird erfindungsgemäß mittels einer Wickeleinrichtung mit den Merkmalen des Anspruchs 1 gelöst. Vorteilhafte Ausgestaltungen ergeben sich aus den Unteransprüchen 2 bis 7.

Die erfindungsgemäße Wickeleinrichtung ist dadurch gekennzeichnet, dass der Antrieb mittelbar oder unmittelbar mit einer Sensoreinrichtung zusammenwirkt. Mittels der Sensoreinrichtung sind zumindest zeitweise, vorzugsweise fortwährend, Daten betreffend mindestens einen Ist-Betriebszustand des Antriebs erfassbar. Ferner umfasst die erfindungsgemäße Wickeleinrichtung eine Steuerungseinrichtung, die mit der Sensoreinrichtung in Daten übertragender Weise verbunden ist. Auf diese Weise sind die erfassten Daten an die Steuerungseinrichtung leitbar und mittels selbiger verarbeitbar.

Die erfindungsgemäße Wickeleinrichtung hat viele Vorteile. Insbesondere bietet sie die Möglichkeit, einen Betriebszustand der Wickeleinrichtung anhand von Daten zu erfassen, die einen Ist-Betriebszustand des Antriebs betreffen. Erfindungsgemäß sind mittels der Sensoreinrichtung eine Leistungsaufnahme und/oder ein Antriebsmoment des Antriebs erfassbar. Das Antriebsmoment bezeichnet dabei das Drehmoment, das auf eine Abtriebswelle des Antriebs wirkt. Mittels dieser Informationen lassen sich ausreichend genaue Rückschlüsse ziehen, anhand derer der Betriebszustand der Wickeleinrichtung ermittelbar ist. Hierzu werden die erfassten Daten an die Steuerungseinrichtung geleitet und mittels der Steuerungseinrichtung verarbeitet. Insbesondere ist es denkbar, dass mittels einer Analyse eines Verlaufs einer Leistungsaufnahme und/oder einem Antriebsmoment des Antriebs eine Aussage darüber getroffen werden kann, in welcher Position sich der mindestens eine Wickelarm der Wickeleinrichtung vor, während und/oder nach einem jeweiligen Wickelvorgang eines Rundballens befindet. Weiterhin kann erkennbar sein, welchen Füllgrad der Materialspeicher aufweist. Ebenfalls ist es denkbar, einen fehlerhaften Betrieb zu erkennen, beispielsweise einen Riss in einer Materialbahn des Hüllmaterials. Hierbei ist es besonders von Vorteil, wenn der Antrieb mit dem mindestens einen Wickelarm zusammenwirkt und diesen um eine Rotationsachse gedreht, sodass der Wickelarm auf einer Kreisbahn um den in seiner Wickelposition vorliegenden Rundballen herumgeführt wird.

In einer besonders vorteilhaften Ausgestaltung der erfindungsgemäßen Wickeleinrichtung ist die Steuerungseinrichtung dazu geeignet, die von der Sensoreinrichtung empfangenen Daten derart zu verarbeiten, dass mittels der Steuerungseinrichtung mindestens eine Steuerinformation gebildet werden kann. Diese Steuerinformation ist sodann dem Antrieb zuleitbar, sodass mindestens ein Ist-Betriebszustand des Antriebs veränderbar ist. Insbesondere ist denkbar, eine Leistung des Antriebs zu steuern, sodass beispielsweise mindestens ein Wickelarm, sofern dieser mit dem Antrieb zusammenwirkt, in eine bestimmte Position relativ zu dem Rundballen oder mit einer bestimmten Drehgeschwindigkeit um eine Rotationsachse gedreht wird.

Sofern die Wickeleinrichtung demgemäß ausgebildet ist, kann es weiterhin von besonderem Vorteil sein, wenn die Daten mittels der Steuerungseinrichtung derart verarbeitbar sind, dass die Steuerungseinrichtung dazu geeignet ist eine Abweichung des Ist-Betriebszustands des Antriebs von einem vorgegebenen Soll-Betriebszustand des Antriebs zu ermitteln. Die Steuerungseinrichtung ist dann vorzugsweise ferner dazu geeignet, die von ihr gebildete Steuerinformation in Abhängigkeit besagter Abweichung zu bilden. Auf diese Weise können mittels der Zusammenwirkung der Sensoreinrichtung und der Steuerungseinrichtung ein Regelkreis implementiert werden, mittels dessen der Antrieb dauerhaft möglichst nah an einem optimalen Soll-Betriebszustand betrieben wird. Hierdurch kann die Wickeleinrichtung insgesamt in einem optimalen Betriebszustand betrieben werden.

Unabhängig davon kann ferner eine solche Wickeleinrichtung besonders von Vorteil sein, deren Steuerungseinrichtung die mittels der Sensoreinrichtung erfassten Daten derart verarbeiten kann, dass eine Information betreffend eine während eines Wickelvorgangs aktuell vorliegende Stellung des mindestens einen Wickelarms relativ zu dem Rundballen und/oder eine Information betreffend ein Füllgrad des Materialspeichers erzeugbar sind. Insbesondere hat sich herausgestellt, dass der Ist-Betriebszustand des Antriebs während eines Wickelvorgangs Veränderungen unterliegt, die regelmäßig auftreten, das heißt insbesondere bei verschiedenen Wickelvorgängen einem immer gleichen Muster folgen. Es hat sich ferner herausgestellt, dass anhand dieses Musters, beispielsweise eines an einer Abtriebswelle des Antriebs anliegenden Drehmoments ("Antriebsdrehmoment"), feststellbar ist, in welcher Position sich der mindestens eine Wickelarm bei Anliegen welches Antriebsmoments relativ zu dem Rundballen befindet. Somit ergeben sich beispielsweise in einer Zeitverlaufskurve des Antriebsmoments des Antriebs eine Mehrzahl zumindest im Wesentlichen äquidistant angeordneter lokaler Tiefpunkte, die sich typischerweise zu einem Zeitpunkt einstellen, zu dem der jeweilige Wickelarm sich gerade an einer der beiden Stirnflächen des Rundballens befindet. Gleichermaßen weist die Zeitverlaufskurve typischerweise Hochpunkte auf, wenn der jeweilige Wickelarm zumindest im Wesentlichen bündig zu einer Stirnfläche bzw. gewissermaßen in einer Flucht der Stirnfläche des jeweiligen Rundballens angeordnet ist.

In einer weiterhin vorteilhaften Ausgestaltung der erfindungsgemäßen Wickeleinrichtung ist der mindestens eine Antrieb dem mindestens einen Wickelarm, vorzugsweise zwei Wickelarmen, zugeordnet. Vorteilhafterweise umfasst die Wickeleinrichtung insgesamt zwei Wickelarme, die - bezogen auf eine Rotationsachse - einander gegenüberliegend ausgebildet sind. Die Wickelarme umfassen vorteilhafterweise jeweils mindestens einen zumindest im Wesentlichen vertikal ausgebildeten Abschnitt, an dem weiter vorzugsweise der Materialspeicher angeordnet ist. Letzterer kann insbesondere von einer Rolle gebildet sein, auf dem das Hüllmaterial, das typischerweise von einer Folie gebildet ist, aufgerollt ist. Der Materialspeicher ist bei einer derartigen Ausführung drehbar an dem Wickelarm gelagert, sodass das auf dem Materialspeicher vorgehaltene Hüllmaterial im Zuge der Rotation der Wickelarme um den Rundballen herum sukzessive abgewickelt werden kann. Vorzugsweise sind die Wickelarme L-förmig ausgebildet, wobei sie jeweils an einem oberen Ende einen sich an den vertikal ausgebildeten Abschnitt anschließenden horizontalen Abschnitt aufweisen. Besonders bevorzugt ist eine solche Ausgestaltung, bei der die Wickelarme gemeinsam in etwa mittig oberhalb des Rundballens zusammengeführt sind, sodass sie gemeinsam mittels eines einzigen Antriebs um eine Rotationsachse rotierbar sind. Letztere ist vorteilhafterweise vertikal orientiert, sodass die Wickelarme in einer horizontalen Ebene um die Rotationsachse rotierbar sind. Zwecks Verteilung des Hüllmaterials an dem Rundballen ist letzterer vorteilhafterweise mittels einer Bewegungseinrichtung rotierbar, die eingangs beispielhaft beschrieben ist.

Bei Vorliegen der vorstehend beschriebenen Ausgestaltung ist es besonders vorteilhaft, wenn die Sensoreinrichtung mit dem Antrieb zusammenwirkt, mittels dessen der mindestens eine Wickelarm antreibbar sind. Hierbei handelt es sich weiter vorzugsweise um denselben Antrieb, der mittels der Steuerungseinrichtung ansteuerbar ist. Auf diese Weise können die mittels der Sensoreinrichtung erfassten Daten betreffend den Ist-Betriebszustand des Antriebs derart umgesetzt werden, dass daraus eine Steuerinformation für denselben Antrieb erwächst. Insbesondere ist es denkbar, dass die Ansteuerung des Antriebs derart erfolgt, dass mindestens ein Betriebsparameter des Antriebs veränderbar ist, vorzugsweise eine Rotationsgeschwindigkeit des Wickelarms bzw. der Wickelarme um die Rotationsachse.

Die erfindungsgemäße Wickeleinrichtung weiter ausgestaltend umfasst selbige mindestens eine Bewegungseinrichtung, mittels der ein in seiner Wickelposition befindliche Rundballen um seine Mittelachse rotierbar ist. Insbesondere ist es denkbar, dass die Bewegungseinrichtung an einer äußeren Mantelfläche des Rundballens angreift und ihn auf diese Weise in Rotation versetzt. Insbesondere kann die Bewegungseinrichtung eine Mehrzahl von Rollen aufweisen, auf denen der Rundballen abrollen kann.

Die zugrunde liegende Aufgabe wird ferner erfindungsgemäß mittels einer landwirtschaftlichen Rundballenpresse mit den Merkmalen des Anspruchs 8 gelöst. Diese Rundballenpresse ist dadurch gekennzeichnet, dass sie mit einer erfindungsgemäßen Wickeleinrichtung gemäß der vorstehenden Beschreibung ausgestattet ist. Die sich hierdurch ergebenden Vorteile sind vorstehend bereits dargelegt. Insbesondere ist es besonders einfach möglich, einen Betriebszustand der Wickeleinrichtung zu ermitteln, wobei auf eine aufwändige und ausfallträchtige Sensorik, wie sie im Stand der Technik verwendet wird, verzichtet werden kann. Stattdessen ist lediglich eine Sensoreinrichtung vorgesehen, die mit dem mindestens einen Antrieb zusammenwirkt einen Ist-Betriebszustand desselben erfasst.

Die zugrunde liegende Aufgabe wird weiterhin in verfahrenstechnischer Hinsicht erfindungsgemäß mittels eines Verfahrens mit den Merkmalen des Anspruchs 9 gelöst. Vorteilhafte Ausgestaltungen ergeben sich aus den Unteransprüchen 10 bis 13.

Das erfindungsgemäße Verfahren ist dadurch gekennzeichnet, dass während des Einwickelns des Rundballens zumindest zeitweise mittels mindestens eine Sensoreinrichtung Daten betreffend mindestens einen Ist-Betriebszustand des Antriebs erfasst werden. Diese Daten werden sodann an eine Steuerungseinrichtung geleitet und mittels selbiger verarbeitet.

Das erfindungsgemäße Verfahren ist mittels der erfindungsgemäßen Wickeleinrichtung besonders einfach durchführbar. Die sich hieraus ergebenden Vorteile sind vorstehend im Zusammenhang mit der erfindungsgemäßen Wickeleinrichtung bereits dargelegt. Insbesondere ist es möglich, den Betriebszustand der Wickeleinrichtung allein anhand einer Beobachtung eines Ist-Betriebszustands des Antriebs zu ermitteln, wobei auf eine aufwändige und anfällige Sensorik verzichtet werden kann. Die Interpretation der mittels der Sensoreinrichtung erfassten Daten erfolgt dabei mittels der Steuerungseinrichtung, wobei - wie vorstehend dargelegt - insbesondere zeitliche Verläufe einer Leistungsaufnahme und/oder eines Antriebsmoments des Antriebs ausgewertet werden können.

Wer vorteilhaften Ausgestaltung des erfindungsgemäßen Verfahrens wird mindestens ein Antrieb der Wickeleinrichtung in Abhängigkeit der erfassten Daten mittels der Steuerungseinrichtung angesteuert. Diese Ansteuerung erfolgt derart, dass mindestens ein Ist-Betriebszustand des Antriebs verändert wird. Dies kann beispielsweise das Antriebsdrehmoment betreffen, dessen Änderung sich in einer Beschleunigung oder Verlangsamung eines jeweiligen Wickelvorgangs niederschlagen kann.

Weiterhin ist es denkbar, dass mittels der Steuerungseinrichtung eine Abweichung mindestens eines Ist-Betriebszustands von einem vorgegebenen Soll-Betriebszustand des Antriebs ermittelt wird. In Abhängigkeit dieser Abweichung wird sodann mittels der Steuerungseinrichtung eine Steuerinformation erzeugt und an den Antrieb geleitet, wobei mittels der Steuerinformation der Antrieb derart angesteuert wird, dass sich sein Ist-Betriebszustand in Richtung des vorgegebenen Soll-Betriebszustands verändert. Diese Verfahrensweise beschreibt eine Regelung des Antriebs in einer solchen Weise, dass ein jeweiliger Wickelvorgang einer bestimmten Soll-Vorgabe entspricht. Dies kann beispielsweise eine Wickeldauer betreffen, das heißt einen Zeitraum, über den hinweg ein jeweiliger Rundballen mit dem Hüllmaterial eingewickelt werden soll. Auch ist es denkbar, den Ist-Betriebszustand des Antriebs in Abhängigkeit davon zu verändern, in welcher Position der mindestens eine Wickelarm bei Beendigung des jeweiligen Wickelvorgangs relativ zu dem Rundballen gesehen einnimmt.

Das erfindungsgemäße Verfahren weiter ausgestaltend wird mittels der Steuerungseinrichtung in Abhängigkeit der erfassten Daten eine Information betreffend eine Stellung des Wickelarms relativ zu dem Rundballen und/oder eine Information betreffend einen Füllgrad des Materialspeichers erzeugt. Überraschenderweise hat sich gezeigt, dass beide Informationen besonders gut anhand eines zeitlichen Verlaufs des Antriebsmoments des Antriebs ermittelt werden können. Somit hat sich beispielsweise gezeigt, dass bei einer Wickeleinrichtung, bei der der mit dem Materialspeicher ausgestattete Wickelarm mittels des Antriebs angetrieben und hierdurch um den Rundballen herumbewegt wird, das Antriebsmoments des Antriebs mit abnehmendem Füllgrad des Materialspeichers abnimmt. Dies liegt darin begründet, dass sich das typischerweise folienartige Hüllmaterial, das auf dem Materialspeicher gelagert ist, mit abnehmendem Füllgrad des Materialspeichers leichter von letzterem abwickeln lässt. Ebenfalls ist es möglich, eine Beschädigung des Hüllmaterials festzustellen, insbesondere einen Abriss des Hüllmaterials. Dies liegt darin begründet, dass die zum Antrieb des jeweiligen Wickelarms erforderliche Energie im Fall eines Abrisses des Hüllmaterials plötzlich abfällt, da ein für das Abwickeln des Hüllmaterials von dem Materialspeicher erforderlicher Kraftanteil plötzlich wegfällt. Auf diese Weise ist mittels der Auswertung der Daten mittels der Steuerungseinrichtung eine fortwährende Überwachung des Betriebszustands der Wickeleinrichtung möglich.

Sofern die Wickeleinrichtung mit mindestens einem Wickelarm ausgestattet ist, der mittels des Antriebs in eine Rotation versetzt und hierdurch um den in seiner Wickelposition vorliegenden Rundballen herum bewegt wird, kann es weiterhin besonders vorteilhaft sein, wenn mittels der Steuerungseinrichtung in Abhängigkeit der erfassten Daten mindestens eine Information betreffend eine Anzahl von Umdrehungen des Wickelarms um den Rundballen erzeugt wird, die der Wickelarm seit Beginn des jeweiligen Wickelvorgangs ausgeführt hat. Mittels einer Vorgabe der Anzahl der Umdrehungen, die der Wickelarm zwecks vollständiger Einwicklung des jeweiligen Rundballens ausführen soll, kann auf diese Weise jeder individuelle Wickelvorgang genau gesteuert werden. Hierbei ist es insbesondere denkbar, die Position des Wickelarms relativ zu dem Rundballen genau zu steuern, sodass der Wickelvorgang unabhängig von einer starren Zeitvorgabe für die Bewegung des Wickelarms kontrolliert werden kann. Eine aufwändige Sensorik, die eine korrekte Positionierung des mindestens einen Wickelarms bezogen auf den Rundballen ermittelt, kann hierbei entfallen.

Die Erfindung ist nachstehend anhand eines Ausführungsbeispiels, das in den Figuren dargestellt ist, näher erläutert. Es zeigt:
- Fig. 1:: Einen Querschnitt durch eine erfindungsgemäße Wickeleinrichtung, die mit einer Rundballenpresse gekoppelt ist, und
- Fig. 2:: Ein Diagramm betreffend einen Verlauf eines Antriebsmoments eines Antriebs der Wickeleinrichtung gemäß Figur 1 aufgetragen über die Zeit.

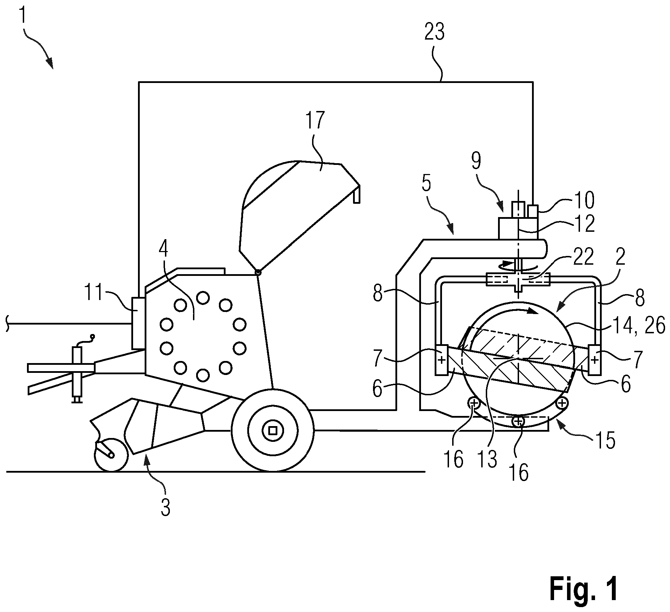

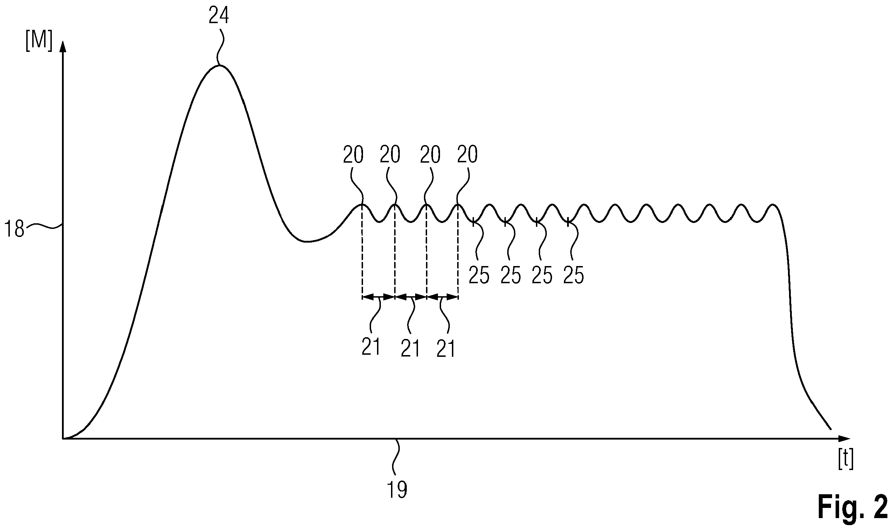

Ein Ausführungsbeispiel, das in den **Figuren 1** **und** **2** veranschaulicht ist, umfasst eine erfindungsgemäße Wickeleinrichtung **5,** die zwei Wickelarme **8** sowie eine Bewegungseinrichtung **15** aufweist. Die Bewegungseinrichtung **15,** die zur Aufnahme eines jeweiligen Rundballens **2** geeignet ist, umfasst eine Mehrzahl von Rollen **3,** mittels der ein jeweiliger Rundballen **2** um seine Mittelachse **13** rotierbar ist. Hierbei weist die Bewegungseinrichtung **15** gewissermaßen eine Kreisbogenform auf, sodass die Rollen **16** jeweils an einer äußeren Mantelfläche **14** des Rundballens **2** anliegen. Mindestens eine der Rollen **16** ist aktiv antreibbar, sodass mittels einer Rotation der jeweiligen Rolle **16** der Rundballen **2** in die jeweils entgegengesetzte Richtung rotierbar ist.

Die beiden Wickelarme **8** sind mittels einer Übertragungseinrichtung **22** gemeinsam an einem Obertrum der Wickeleinrichtung **5** angeordnet. Die Übertragungseinrichtung **22** wirkt unmittelbar mit einem Antrieb **9** zusammen, mittels dessen die Wickelarme **8** um eine Rotationsachse **12** rotierbar sind. Die Rotationsachse **12** ist in dem gezeigten Beispiel vertikal orientiert, wobei die beiden Wickelarme **8** an ihren dem Antrieb **9** abgewandten Enden jeweils einen Materialspeicher **7** aufweisen. Mittels der Materialspeicher **7** wird jeweils ein Hüllmaterial **6** vorgehalten, dass hier von einer aufgerollten Kunststofffolie gebildet ist. Das Hüllmaterial **6** ist von dem jeweils zugehörigen Materialspeicher **7** abwickelbar, sodass der auf der Bewegungseinrichtung **15** gelagerte Rundballen **2** mittels eines Betriebs des Antriebs **9** um den Rundballen **2** herum bewegbar und im Zuge dessen mit dem Hüllmaterial **6** einwickelbar ist. In der Darstellung gemäß **Figur 1** ist ein Zustand veranschaulicht, bei dem der Rundballen **2** gerade mit einer ersten Bahn des Hüllmaterials **6** eingefasst ist. Mittels simultaner Rotation der Wickelarme **8** um den Rundballen **2** sowie des Rundballens **2** um seine Mittelachse **13** kann der Rundballen **2** sukzessive vollständig mit dem Hüllmaterial **6** eingewickelt werden.

Der Antrieb **9** der Wickelarme **8** wirkt in dem gezeigten Beispiel mit einer Sensoreinrichtung **10** zusammen, mittels der eine Leistungsaufnahme des Antriebs **9** sowie ein Antriebsdrehmoment des Antriebs **9** erfasst werden. Auf diese Weise erzeugte Daten werden mittels einer Datenleitung **23,** die insbesondere von einer kabellosen Datenverbindung gebildet sein kann, an eine Steuerungseinrichtung **11** der Wickeleinrichtung **5** übertragen. Diese in dem gezeigten Beispiel körperlich an einer Rundballenpresse **1** montiert, die mit der Wickeleinrichtung **5** zusammenwirkt. Die Steuerungseinrichtung **11** ist dazu geeignet, die mittels der Sensoreinrichtung **10** erfassten Daten zu verarbeiten und auf diese Weise Rückschlüsse auf einen Ist-Betriebszustand des Antriebs **9** und indirekt auf einen Betriebszustand der Wickeleinrichtung **5** zu ziehen. Die Rundballenpresse **1** kann als solche von einer üblichen Rundballenpresse gebildet sein, die über eine Aufnahmeeinrichtung **3,** eine Presskammer **4** sowie eine Tür **17** verfügt, wobei mittels der Presskammer **4** aufgenommenes Erntegut zu einem jeweiligen Rundballen **2** gepresst wird, der sodann an einer Rückseite der Rundballenpresse **1** durch eine von der Tür **17** freigegebene Öffnung hindurch in Richtung der nachgeschalteten Wickeleinrichtung **5** bewegt wird.

Die Verarbeitung der mittels der Sensoreinrichtung **10** erfassten Daten erlaubt mitunter die Feststellung einer Position der Wickelarme **8** relativ zu dem Rundballen **2.** Hierzu ist in **Figur 2** beispielhaft das Antriebsdrehmoment [M] des Antriebs **9** aufgetragen über die Zeit [t] dargestellt, wobei Zeit [t] auf der x-Achse **19** und das Antriebsdrehmoment [M] auf der y-Achse **18** aufgetragen sind. Die dargestellte Verlaufskurve beschreibt einen vollständigen Wickelvorgang, im Zuge dessen ein jeweiliger Rundballen **2** mit Hüllmaterial **6** eingewickelt wird. Im Zuge der anfänglichen Beschleunigung der Wickelarme **8** ergibt sich ein erster Hochpunkt **24,** der im Zuge der Überwindung der Massenträgheit der Wickelarme **8** anfällt. Sodann nimmt der Verlauf des Antriebsdrehmoments [M] näherungsweise eine Sinusform an, wobei das Antriebsdrehmoment [M] eine Vielzahl von Hochpunkten **20** und Tiefpunkten **25** durchschreitet, die jeweils zumindest im Wesentlichen um dasselbe zeitliche Intervall **21** voneinander beabstandet sind. Dieser Verlauf lässt einen Rückschluss auf den Betriebszustand der Wickeleinrichtung **5** zu, wobei sich ergeben hat, dass die jeweiligen Hochpunkte **20** des Verlaufs des Antriebsdrehmoments [M] mit einer Position der Wickelarme **8** relativ zu dem Rundballen **2** zusammenfallen, bei der die Wickelarme **8** gewissermaßen bündig mit einer jeweiligen stirnseitigen Umlaufkante **26** des Rundballens **2** abschließen. Eine solche Situation ist hier beispielhaft in **Figur 1** dargestellt. Anhand der Auswertung des jeweiligen Ist-Betriebszustands des Antriebs **9,** der hier von dem Antriebsdrehmoment [M] repräsentiert wird, lässt sich mithin bestimmen, wie der Rundballen **2** und die Wickelarme **8** relativ zueinander positioniert sind. Im Stand der Technik übliche Beschleunigungs- und Positionssensoren und dergleichen, die mit einem höheren Ausfallrisiko beaufschlagt sind, können mithin entfallen. Die Abnahme des Antriebsdrehmoments [M] an einer Antriebswelle des Antriebs **9** ist hingegen besonders einfach abnehmbar, wobei die hierfür benötigte Technik robust ausgebildet werden kann.

### Bezugszeichenliste

- 1: Rundballenpresse
- 2: Rundballen
- 3: Aufnahmeeinrichtung
- 4: Presskammer
- 5: Wickeleinrichtung
- 6: Hüllmaterial
- 7: Materialspeicher
- 8: Wickelarm
- 9: Antrieb
- 10: Sensoreinrichtung
- 11: Steuerungseinrichtung
- 12: Rotationsachse
- 13: Mittelachse
- 14: Mantelfläche
- 15: Bewegungseinrichtung
- 16: Rolle
- 17: Tür
- 18: y-Achse
- 19: x-Achse
- 20: Hochpunkt
- 21: Intervall
- 22: Übertragungseinrichtung
- 23: Datenverbindung
- 24: Hochpunkt
- 25: Tiefpunkt
- 26: Umlaufkante

## Patentansprüche

1. Wickeleinrichtung (5) zum Einwickeln landwirtschaftlicher Rundballen (2) mit einem Hüllmaterial (6), umfassend
- eine Ballenaufnahme (22) zur Aufnahme des Rundballens (2),
- mindestens einen Wickelarm (8) sowie
- mindestens einen Materialspeicher (7) zur Vorhaltung des Hüllmaterials (6),
wobei bei Vorliegen eines gepressten Rundballens (2) in einer Wickelposition, in der er mittels der Ballenaufnahme (22) aufgenommen ist, mittels mindestens eines elektrischen Antriebs (9) der Wickelarm (8) und der Rundballen (2) derart relativ zueinander bewegbar sind, dass der Rundballen (2) mittels des Hüllmaterials (6) einwickelbar ist,
wobei der Antrieb (9) mittelbar oder unmittelbar mit einer Sensoreinrichtung (10) zusammenwirkt, wobei die Sensoreinrichtung (10) dazu eingerichtet ist, zumindest zeitweise Daten betreffend mindestens einen Ist-Betriebszustand des Antriebs (9) zu erfassen,
wobei die Sensoreinrichtung (10) in Daten übertragender Weise mit einer Steuerungseinrichtung (11) verbunden ist, sodass die erfassten Daten an die Steuerungseinrichtung (11) geleitet werden, wobei die Steuerungseinrichtung (11) dazu eingerichtet ist, die erfassten Daten zu verarbeiten,
**dadurch gekennzeichnet, dass**
die Sensoreinrichtung (10) dazu eingerichtet ist, eine Leistungsaufnahme des Antriebs (9) und/oder ein Antriebsmoment des Antriebs (9) zu erfassen.

2. Wickeleinrichtung (5) nach Anspruch 1, **dadurch gekennzeichnet, dass** die Steuerungseinrichtung (11) dazu eingerichtet ist, die Daten derart zu verarbeiten, dass eine Steuerinformation gebildet und dem Antrieb (9) zugeleitet wird, sodass mindestens ein Ist-Betriebszustand des Antriebs (9) verändert wird.

3. Wickeleinrichtung (5) nach Anspruch 2, **dadurch gekennzeichnet, dass** die Steuerungseinrichtung (11) dazu eingerichtet ist, die Daten derart zu verarbeiten, dass eine Abweichung des Ist-Betriebszustands des Antriebs (9) und einem vorgegebenen Soll-Betriebszustand ermittelt und die Steuerinformation in Abhängigkeit der Abweichung gebildet wird.

4. Wickeleinrichtung (5) nach einem der Ansprüche 1 bis 3, **dadurch gekennzeichnet, dass** die Steuerungseinrichtung (11) dazu eingerichtet ist, die erfassten Daten derart zu verarbeiten, dass eine Information betreffend eine während eines Wickelvorgangs aktuell vorliegende Stellung des Wickelarms (8) relativ zu dem Rundballen (2) und/oder eine Information betreffend einen Füllgrad des Materialspeichers (7) erzeugt wird.

5. Wickeleinrichtung (5) nach einem der Ansprüche 1 bis 4, **dadurch gekennzeichnet, dass** der Antrieb (9) dazu eingerichtet ist, den mindestens einen Wickelarm (8), vorzugsweise zwei Wickelarme (8), um eine, vorzugsweise vertikale, Rotationsachse (12) um den in seiner Wickelposition befindlichen Rundballen (2) herum zu rotieren.

6. Wickeleinrichtung (5) nach Anspruch 5, **dadurch gekennzeichnet, dass** die Steuerungseinrichtung (11) dazu eingerichtet ist, den mindestens einen Antrieb (9), vorzugsweise denselben Antrieb (9), der mit der Sensoreinrichtung (10) zusammenwirkt, anzusteuern, sodass mindestens ein Betriebsparameter des Antriebs (9) infolge der Verarbeitung der erfassten Daten verändert wird, vorzugsweise eine Rotationsgeschwindigkeit des Wickelarms (8) um dessen Rotationsachse (12).

7. Wickeleinrichtung (5) nach einem der Ansprüche 1 bis 6, **dadurch gekennzeichnet, dass** die Wickeleinrichtung (5) dazu eingerichtet ist, den in seiner Wickelposition befindlichen Rundballen (2) um seine Mittelachse (13) zu rotieren, vorzugsweise mittels eines an einer äußeren Mantelfläche (14) des Rundballens (2) angreifenden Bewegungseinrichtung (15).

8. Landwirtschaftliche Rundballenpresse (1) zum Pressen von Erntegut zu einem zylindrischen Rundballen (2), umfassend
- eine Aufnahmeeinrichtung (3) zur Aufnahme von Erntegut von einem Untergrund,
- eine Presskammer (4) zur Pressung des aufgenommenen Ernteguts zu dem Rundballen (2),
- eine der Presskammer (4) nachgeschaltete Wickeleinrichtung (5) nach einem der Ansprüche 1 bis 7.

9. Verfahren zum Betrieb einer Wickeleinrichtung (5) zum Einwickeln landwirtschaftlicher Rundballen (2) mit einem Hüllmaterial (6), umfassend die folgenden Verfahrensschritte:
a) Ein einzuwickelnder, gepresster Rundballen (2) wird mittels einer Ballenaufnahme (22) der Wickeleinrichtung (5) aufgenommen, sodass er sich in einer Wickelposition befindet.
b) Mittels mindestens eines elektrischen Antriebs (9) werden ein Wickelarm (8) der Wickeleinrichtung (5) und der in der Wickelposition befindliche Rundballen (2) derart relativ zueinander bewegt, dass der Rundballen (2) mit dem Hüllmaterial (6) eingewickelt wird,
c) Während des Einwickelns des Rundballens (2) werden zumindest zeitweise mittels einer Sensoreinrichtung (10) Daten betreffend mindestens einen Ist-Betriebszustand des Antriebs (9) erfasst.
d) Die erfassten Daten werden an eine Steuerungseinrichtung (11) geleitet und mittels der Steuerungseinrichtung (11) verarbeitet **gekennzeichnet durch** den folgenden Verfahrensschritt:
e) Mittels der Sensoreinrichtung (10) wird eine Leistungsaufnahme des Antriebs (9) und/oder ein Antriebsmoment des Antriebs (9) erfasst.

10. Verfahren nach Anspruch 9, **dadurch gekennzeichnet, dass** mindestens ein Antrieb (9) in Abhängigkeit der erfassten Daten mittels der Steuerungseinrichtung (11) angesteuert wird, wobei mindestens ein Ist-Betriebszustand des Antriebs (9) verändert wird.

11. Verfahren nach Anspruch 10, **dadurch gekennzeichnet, dass** eine Abweichung mindestens eines Ist-Betriebszustands von einem vorgegebenen Soll-Betriebszustand ermittelt wird, wobei mittels der Steuerungseinrichtung (11) eine solche Steuerinformation ermittelt und an den Antrieb (9) geleitet wird, mittels der der Ist-Betriebszustand des Antriebs (9) in Richtung des Soll-Betriebszustands verändert wird.

12. Verfahren nach einem der Ansprüche 9 bis 11, **dadurch gekennzeichnet, dass** mittels der Steuerungseinrichtung (11) in Abhängigkeit der erfassten Daten eine Information betreffend eine Stellung des Wickelarms (8) relativ zu dem Rundballen (2) und/oder eine Information betreffend einen Füllgrad des Materialspeichers (7) erzeugt wird.

13. Verfahren nach einem der Ansprüche 9 bis 12, **dadurch gekennzeichnet, dass** mittels der Steuerungseinrichtung (11) in Abhängigkeit der erfassten Daten eine Information betreffend eine Anzahl von Umdrehungen des Wickelarms (8) um den Rundballen (2) seit Beginn des jeweiligen Wickelvorgangs erzeugt wird.

## Claims

1. A wrapping device (5) for wrapping agricultural round bales (2) with a wrapping material (6), comprising
- a bale holder (22) for receiving the round bale (2),
- at least one wrapping arm (8), as well as
- at least one magazine of material (7) to hold the wrapping material (6),
wherein, when a baled round bale (2) has been placed in a wrapping position in which it is received by means of the bale holder (22), by means of at least one electric drive (9), the wrapping arm (8) and the round bale (2) can be moved relative to each other in a manner such that the round bale can be wrapped by means of the wrapping material (6),
wherein the drive (9) cooperates directly or indirectly with a sensor device (10), wherein the sensor device (10) is configured to at least periodically acquire data pertaining to at least one actual operational state of the drive (9),
wherein the sensor device (10) is connected to a control device (11) in a data-transmitting manner so that the acquired data is transferred to the control device (11), wherein the control device (11) is configured to process the acquired data,
**characterized in that**
the sensor device (10) is configured to detect a power consumption of the drive (9) and/or a drive torque of the drive (9).

2. The wrapping device (5) according to claim 1, **characterized in that** the control device (11) is configured to process the data in a manner such that control information is generated and transferred to the drive (9) so that at least one actual operational state of the drive (9) is varied.

3. The wrapping device (5) according to claim 2, **characterized in that** the control device (11) is configured to process the data in a manner such that a discrepancy between the actual operational state of the drive (9) and a predetermined nominal operational state is determined and the control information is generated as a function of the discrepancy.

4. The wrapping device (5) according to one of claims 1 to 3, **characterized in that** the control device (11) is configured to process the acquired data in a manner such that information is produced which pertains to a current position of the wrapping arm (8) relative to the round bale (2) during a wrapping procedure and/or information is produced which pertains to a fill level of the magazine of material (7).

5. The wrapping device (5) according to one of claims 1 to 4, **characterized in that** the drive (9) is configured to rotate the at least one wrapping arm (8), preferably two wrapping arms (8), about an axis of rotation (12) which is preferably vertical, around the round bale (2) located in its wrapping position.

6. The wrapping device (5) according to claim 5, **characterized in that** the control device (11) is configured to control the at least one drive (9), preferably the same drive (9) which cooperates with the sensor device (10), so that at least one operational parameter of the drive (9) is varied as a result of processing the acquired data, preferably a speed of rotation of the wrapping arm (8) about its axis of rotation (12).

7. The wrapping device (5) according to one of claims 1 to 6, **characterized in that** the wrapping device (5) is configured to rotate the round bale (2) about its central axis (13) when it is located in its wrapping position, preferably by means of an activating mechanism (15) which engages with an outer curved surface (14) of the round bale (2).

8. An agricultural round baler (1) for baling harvested material into a cylindrical round bale (2), comprising :
- a pickup device (3) for picking up harvested material from the ground,
- a bale chamber (4) for baling the harvested material which has been picked up into the round bale (2),
- a wrapping device (5) according to one of claims 1 to 7 which is downstream of the bale chamber (4).

9. A method for operating a wrapping device (5) for wrapping agricultural round bales (2) with a wrapping material (6), comprising the following steps of the method :
a) receiving a baled round bale (2) to be wrapped in a bale holder (22) of the wrapping device (5) so that it is located in a wrapping position,
b) moving a wrapping arm (8) of the wrapping device (5) relative to the round bale (2) which is located in the wrapping position by means of at least one electric drive (9) in a manner such that the round bale (2) is wrapped with the wrapping material (6),
c) during wrapping of the round bale (2), at least periodically acquiring data pertaining to at least one actual operational state of the drive (9) by means of a sensor device (10),
d) transferring the acquired data to a control device (11) and processing the data by means of the control device (11), **characterized by** the following step of the method:
e) detecting a power consumption of the drive (9) and/or a drive torque of the drive (9) by means of the sensor device (10).

10. The method according to claim 9, **characterized in that** at least one drive (9) is controlled as a function of the data acquired by means of the control device (11), wherein at least one actual operational state of the drive (9) is varied.

11. The method according to claim 10, **characterized in that** a discrepancy between at least one actual operational state and a specified nominal operational state is determined, wherein by means of the control device (11), such control information is determined and transferred to the drive (9), by means of which the actual operational state of the drive (9) is varied in the direction of the nominal operational state.

12. The method according to one of claims 9 to 11, **characterized in that** information pertaining to a position of the wrapping arm (8) relative to the round bale (2) and/or information pertaining to a fill level of the magazine of material (7) is produced by the control device (11) as a function of the acquired data.

13. The method according to one of claims 9 to 12, **characterized in that** information pertaining to a number of turns of the wrapping arm (8) around the round bale (2) since the start of the respective wrapping procedure is produced by the control device (11) as a function of the acquired data.

## Revendications

1. Équipement d'enrubannage (5) pour enrubanner des balles rondes agricoles (2) avec un matériau d'enveloppe (6), incluant,
- un moyen de réception de balle (22) pour recevoir la balle ronde (2),
- au moins un bras d'enrubannage (8) ainsi que
- au moins une réserve de matériau (7) pour tenir en réserve le matériau d'enveloppe (6),
en présence d'une balle ronde pressée (2) dans une position d'enrubannage dans laquelle elle est reçue à l'aide du moyen de réception de balle (22), le bras d'enrubannage (8) et la balle ronde (2) étant déplaçables l'un par rapport à l'autre à l'aide d'au moins un moyen d'entraînement électrique (9), de façon que la balle ronde (2) soit enrubannable au moyen du matériau d'enveloppe (6),
le moyen d'entraînement (9) coopérant indirectement ou directement avec un équipement de capteur (10), l'équipement de capteur (10) étant agencé pour recueillir au moins temporairement des données relatives au moins à un état de fonctionnement réel du moyen d'entraînement (9),
l'équipement de capteur (10) étant connecté d'une manière à transmettre des données à un équipement de commande (11), de façon que les données recueillies soient dirigées vers l'équipement de commande (11), l'équipement de commande (11) étant agencé pour traiter les données recueillies,
**caractérisé en ce que**
l'équipement de capteur (10) est agencé pour détecter une puissance absorbée par le moyen d'entraînement (9) et/ou un moment d'entraînement du moyen d'entraînement (9).

2. Équipement d'enrubannage (5) selon la revendication 1, **caractérisé en ce que** l'équipement de commande (11) est agencé pour traiter les données de façon qu'une information de commande soit formée et envoyée au moyen d'entraînement (9), de façon qu'au moins un état de fonctionnement réel du moyen d'entraînement (9) soit modifié.

3. Équipement d'enrubannage (5) selon la revendication 2, **caractérisé en ce que** l'équipement de commande (11) est agencé de façon que les données soient traitées de façon qu'un écart de l'état de fonctionnement réel du moyen d'entraînement (9) par rapport à un état de fonctionnement de consigne prescrit soit déterminé et que l'information de commande soit formée en fonction de l'écart.

4. Équipement d'enrubannage (5) selon une des revendications 1 à 3, **caractérisé en ce que** l'équipement de commande (11) est agencé pour traiter les données recueillies, de façon à générer une information relative à une position du bras d'enrubannage (8) existant instantanément pendant l'opération d'enrubannage par rapport à la balle ronde (2) et/ou une information relative à un degré de remplissage de la réserve de matériau (7).

5. Équipement d'enrubannage (5) selon une des revendications 1 à 4, **caractérisé en ce que** le moyen d'entraînement (9) est agencé pour faire tourner le au moins un bras d'enrubannage (8), de préférence deux bras d'enrubannage (8), autour d'un axe de rotation, de préférence vertical, (12) autour de la balle ronde (2) se trouvant dans sa position d'enrubannage.

6. Équipement d'enrubannage (5) selon la revendication 5, **caractérisé en ce que** l'équipement de commande (11) est agencé pour solliciter au moins un moyen d'entraînement (9), de préférence le même moyen d'entraînement (9) qui coopère avec l'équipement de capteur (10), de façon qu'au moins un paramètre de fonctionnement du moyen d'entraînement (9) soit modifié à la suite du traitement des données recueillies, de préférence une vitesse de rotation du bras d'enrubannage (8) autour de son axe de rotation (12) .

7. Équipement d'enrubannage (5) selon une des revendications 1 à 6, **caractérisé en ce que** l'équipement d'enrubannage (5) est agencé pour faire tourner la balle ronde (2) se trouvant dans sa position d'enrubannage autour de son axe médian (13), de préférence au moyen d'un équipement de déplacement (15) agissant sur une surface latérale extérieure (14) de la balle ronde (2).

8. Presse agricole à balles rondes (1) pour presser du produit récolté sous la forme d'une balle ronde cylindrique (2), incluant
- un équipement de ramassage (3) pour ramasser du produit récolté sur un sol,
- une chambre de pressage (4) pour presser du produit récolté ramassé sous la forme de la balle ronde (2),
- un équipement d'enrubannage (5), selon une des revendications 1 à 7, succédant à la chambre de pressage (4).

9. Procédé de fonctionnement d'un équipement d'enrubannage (5) pour enrubanner des balles rondes agricoles (2) avec un matériau d'enveloppe (6), incluant les étapes de procédé suivantes :
a) Une balle ronde pressée (2) à enrubanner est reçue à l'aide d'un moyen de réception de balle (22) de l'équipement d'enrubannage (5), de sorte qu'elle se trouve dans une position d'enrubannage.
b) À l'aide d'au moins un moyen d'entraînement électrique (9), un bras d'enrubannage (8) de l'équipement d'enrubannage (5) et la balle ronde (2) se trouvant dans la position d'enrubannage sont déplacés l'un par rapport à l'autre, de façon que la balle ronde (2) soit enrubannée avec le matériau d'enveloppe (6) .
c) Pendant l'enrubannage de la balle ronde (2) sont recueillies au moins temporairement, à l'aide d'un équipement de capteur (10), des données relatives au moins à un état de fonctionnement réel du moyen d'entraînement (9) .
d) Les données recueillies sont dirigées vers un équipement de commande (11) et traitées à l'aide de l'équipement de commande (11) **caractérisé par** l'étape de procédé suivante :
e) à l'aide de l'équipement de capteur (10) est détectée une puissance absorbée par le moyen d'entraînement (9) et/ou un moment d'entraînement du moyen d'entraînement (9).

10. Procédé selon la revendication 9, **caractérisé en ce qu'**au moins un moyen d'entraînement (9) est sollicité à l'aide de l'équipement de commande (11) en fonction des données recueillies, au moins un état de fonctionnement réel du moyen d'entraînement (9) étant modifié.

11. Procédé selon la revendication 10, **caractérisé en ce qu'**un écart au moins d'un état de fonctionnement réel par rapport à un état de fonctionnement de consigne prescrit est détecté, une information de commande étant déterminée à l'aide de l'équipement de commande (11) et transmise au moyen d'entraînement (9), à l'aide de laquelle l'état de fonctionnement réel du moyen d'entraînement (9) est modifié en direction de l'état de fonctionnement de consigne.

12. Procédé selon une des revendications 9 à 11, **caractérisé en ce que**, à l'aide de l'équipement de commande (11), en fonction des données recueillies, est générée une information relative à une position du bras d'enrubannage (8) par rapport à la balle ronde (2) et/ou une information relative à un degré de remplissage de la réserve de matériau (7).

13. Procédé selon une des revendications 9 à 12, **caractérisé en ce que**, à l'aide de l'équipement de commande (11), en fonction des données recueillies, est générée une information relative à un nombre de tours du bras d'enrubannage (8) autour de la balle ronde (2) depuis le début de l'opération d'enrubannage respective.
